(19) Europäisches Patentamt
European Patent Office
Office européen des brevets

(11) EP 3 308 957 B1

(12) # EUROPÄISCHE PATENTSCHRIFT

(45) Veröffentlichungstag und Bekanntmachung des Hinweises auf die Patenterteilung:
**31.03.2021 Patentblatt 2021/13**

(51) Int Cl.:
***B32B 27/36*** *(2006.01)* ***C08J 5/18*** *(2006.01)*
***C08K 3/34*** *(2006.01)*

(21) Anmeldenummer: **17194934.0**

(22) Anmeldetag: **05.10.2017**

(54) **ORIENTIERTE POLYESTERFOLIEN MIT ERHÖHTER WÄRMELEITFÄHIGKEIT**
ORIENTED POLYESTER FILMS HAVING ENHANCED HEAT CONDUCTIVITY
FEUILLES EN POLYESTER ORIENTÉES À CONDUCTIVITÉ THERMIQUE ACCRUE

(84) Benannte Vertragsstaaten:
**DE FR GB LU**

(30) Priorität: **17.10.2016 DE 102016220280**

(43) Veröffentlichungstag der Anmeldung:
**18.04.2018 Patentblatt 2018/16**

(73) Patentinhaber: **Mitsubishi Polyester Film GmbH
65203 Wiesbaden (DE)**

(72) Erfinder:
- **BORK, Andreas
67593 Westhofen (DE)**
- **KLIESCH, Holger
65462 Ginsheim-Gustavsburg (DE)**
- **KUHMANN, Bodo
65594 Runkel (DE)**
- **FISCHER, Ingo
65558 Heistenbach (DE)**
- **FISCHER, Viktor
55131 Mainz (DE)**
- **HERBST, Thiemo
55116 Mainz (DE)**
- **WUCHTER, Matthias
72770 Reutlingen-Gönningen (DE)**
- **HENNE, Christian
71154 Nufrigen (DE)**

(74) Vertreter: **Schweitzer, Klaus
Plate Schweitzer Zounek
Patentanwälte
Rheingaustrasse 196
65203 Wiesbaden (DE)**

(56) Entgegenhaltungen:
**EP-A1- 2 878 619 EP-A1- 2 942 367**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Mindestens uniaxial orientierte Polyesterfolie mit erhöhter Wärmeleitfähigkeit, die Partikel auf Basis von Silikaten zur Erhöhung der Wärmeleitfähigkeit enthält. Beschrieben werden ein Verfahren zur Herstellung dieser Folien sowie ihre Verwendung als Elektroisoliermaterial.

## Zusammenfassung

Die vorliegende Erfindung betrifft eine ein oder mehrschichtige, mindestens monoaxial orientierte Polyesterfolie gemäß Anspruch 1, sowie die Verwendung dieser Folie gemäß Anspruch 13. Die erfindungsgemäße Folie eignet sich zur Verwendung als Elektroisoliermaterial, z.B. als Rückseitenfolie für Solarmodule, als Motorisolationsfolie, als Isolationsfolie in Computern und elektronischen Geräten aller Art.

Weiterhin betrifft die vorliegende Erfindung ein Verfahren zur Herstellung der erfindungsgemäßen Polyesterfolie gemäß Anspruch 12.

## Beschreibung

Folien in Elektroisolieranwendungen müssen eine Reihe von Anforderungen erfüllen. Zum einen müssen sie eine hohe elektrische Isolierwirkung haben (Durchschlagfestigkeit, Kriechstromfestigkeit) und müssen zudem die durch den elektrischen Stromfluss entstehende Wärme durchlassen, um eine Überhitzung der stromführenden Teile zu vermeiden. Üblicherweise sind diese beiden Eigenschaften gegenläufig und insbesondere die Wärmeleitung vieler klassischer Elektroisoliermaterialien ist daher eher niedrig. So haben z.B. die aufgrund ihrer hohen elektrischen Durchschlagfestigkeit häufig eingesetzten biaxial orientierten Polyethylentherephthalatfolien eine Wärmeleitfähigkeit von kleiner gleich 0,2 W $m^{-1}$ $K^{-1}$. Hostaphan® RN 190 besitzt beispielsweise eine Wärmeleitfähigkeit von 0,2 W $m^{-1}$ $K^{-1}$ senkrecht zur Folienebene (Messverfahren TIMA). Kapton Folie (Polyimid DuPont) weist laut Datenblatt im unmodifizierten Zustand eine Wärmeleitfähigkeit von 0,12 W $m^{-1}$ $K^{-1}$ auf. Die derzeit großtechnisch als Elektroisolierfolien eingesetzten Polyimide wie z.B. Kapton MT mit Aluminiumoxid als wärmeleitfähigem Füllstoff und einer Wärmeleitfähigkeit laut Datenblatt von 0,46 W $m^{-1}$ $K^{-1}$ sind extrem teuer. Zudem sind keine Folien mit ausreichend hoher Gesamtdurchschlagfestigkeit (Dicke) für viele Anwendungen, wie Motorisolationsfolie, erhältlich.

Polyesterformmassen mit erhöhter Wärmeleitfähigkeit sind z.B. in Anlehnung an EP 2209845 unter Verwendung von Glaskugeln oder Calciumfluoridpartikeln hergestellt worden, wobei die Patentschrift weder Beispiele mit Polyester enthält, noch die beschriebenen CaF Partikel aufgrund ihrer Größe von 30 $\mu$m für die Herstellung von orientierten Polyesterfolien geeignet sind. Derartig große Partikel führen bei der Orientierung zu großen Voids (Gaseinschlüssen) in der Folie, die die Wärmeleitfähigkeit deutlich reduzieren würden und führen zu Folienabrissen, die eine großtechnische Herstellung der Folie unmöglich macht. Die Schrift enthält auch folgerichtigerweise keine Beispiele zu orientierten Folien.

Das Dokument WO 2016/139992 A1 beschreibt wärmeleitfähige biaxial orientierte Polyesterfolien. Es werden Partikel offenbart, welche sich für den Einsatz in wärmeleitfähigen Polyesterfolien eignen sollen; unter anderem Wollastonit und Talkum. In den Beispielen werden Wollastonit und nadelförmiges Titanoxid eingesetzt. Die Wärmeleitfähigkeiten dieser Folien lag bei 0.26 W/mK und 0.29 W/mK.

Das Dokument EP 2 878 620 A1 betrifft Zusammensetzungen, insbesondere thermoplastische Formmassen, auf Basis von Polyestern und triklin pinakoidalem Aluminiumsilikat. Diese Zusammensetzungen werden als Formmassen für den Spritzguss verwendet. Der Einsatz von 30-85 Gew.-% eines triklinen pinakoidalen Aluminiumsilikats wird beschrieben.

Partikel mit höherer Leitfähigkeit sind in der Literatur beschrieben. Besonders hohe Leitfähigkeit weisen z.B. Graphit > 100 W $m^{-1}$ $K^{-1}$, Bornitrid > 30 W $m^{-1}$ $K^{-1}$, Korund > 30 W $m^{-1}$ $K^{-1}$ und Periclase > 25 W $m^{-1}$ $K^{-1}$ auf. Verglichen mit Kunststoffen haben aber auch weniger leitfähige Partikel wie Kyanite oder Cristobalit ca. 8 - 10 W $m^{-1}$ $K^{-1}$, $MgO{\cdot}Al_2O_3$ 6,8 W $m^{-1}$ $K^{-1}$, Quarz 3 - 7 W $m^{-1}$ $K^{-1}$, Magnetit $Fe_3O_4$ >4,5 W $m^{-1}$ $K^{-1}$, Talkum $Mg_3[Si_4O_{10}][OH]_2$ >1,5 W $m^{-1}$ $K^{-1}$, $SrFe_{12}O_{19}$ >3 W $m^{-1}$ $K^{-1}$ und Rutil 3 - 5 W $m^{-1}$ $K^{-1}$ eine hohe Wärmeleitfähigkeit.

Die Eignung von Polyesterfolie als elektrischer Isolator ist literaturbekannt, wobei die Durchschlagfestigkeit von Polyethylentherephthalat (PET) durch eine mindestens monoaxiale, bevorzugt biaxiale Verstreckung deutlich erhöht wird.

Für Elektroisolieranwendungen, insbesondere bei erhöhten Temperaturen, sind zudem die erhöhte Hydrolyse-Stabilität und die Thermooxidative-Stabilität des Polyesters von Bedeutung.

## Aufgabe

Die Aufgabe der vorliegenden Erfindung bestand darin, eine Polyesterfolie mit erhöhter Wärmeleitfähigkeit $\geq$ 0,3 W $m^{-1}$ $K^{-1}$ herzustellen, die sich auf existierenden Polyesterfolienanlagen herstellen lässt und mindestens uniaxial

orientierbar ist, die weiterhin eine Durchschlagfestigkeit von mindestens 90 kV $mm^{-1}$ gemäß DIN40634 (bei 23°C und AC) aufweist. Die Folie hat weiterhin eine Reißdehnung von mindestens 5 % in jeder Folienrichtung und weist einen relativen Temperaturindex (RTI) von min. 90 °C auf. Der RTI-Wert korreliert mit der Temperatur in °C bei der die Folie im Dauereinsatz versagt. Die Folie lässt sich in einer Dicke von 9 - 400 μm herstellen. Die erfindungsgemäße Folie soll sich zur Verwendung als Elektroisoliermaterial z.B. als Rückseitenfolie für Solarmodule, als Motorisolationsfolie, als Isolationsfolie in Computern und elektronischen Geräten aller Art eignen.

**Lösung**

Gelöst wird diese Aufgabe durch eine mindestens monoaxial orientierte, ein- oder mehrschichtige Polyesterfolie, die eine Wärmeleitfähigkeit ≥ 0,3 W $m^{-1}$ $K^{-1}$ senkrecht zur Folienebene aufweist, wobei:

- die Folie mindestens 10 - 45 Gew.-% krtistalline Silikatpartikel enthält,
- die Silikatpartikel einen $d_{50}$-Wert zwischen 0,1 und 15 μm aufweisen und Kyanit und/oder Cristobalit sind,
- die Folie zu mindestens 50 Gew.-% aus einer polymeren Komponente besteht, die wiederum zu mindestens 75 Mol.-% aus einem thermoplastischen Polyester besteht.

Die Gesamtfoliendicke beträgt mind. 9 μm und maximal 400 μm. Bevorzugt liegt die Foliendicke bei mindestens 100 und maximal 350 μm und idealerweise bei mindestens 120 μm und maximal 300 μm. Liegt die Foliendicke unter 9 μm, so lässt sich die Folie mit den oben beschriebenen Füllgraden an Silikatpartikeln nicht verfahrenssicher herstellen und ist zudem nur für Niederspannungsanwendungen geeignet. Oberhalb von 400 μm ist die Herstellung auf bestehenden Polyesteranlagen nicht mehr wirtschaftlich und lässt sich nicht mehr ausreichend schnell auf einer Kühlwalze abkühlen. Werden dickere Folien als 400 μm für Hochspannungsanwendungen benötigt, müssen mehrere Lagen der erfindungsgemäßen Folien nach geeigneten Verfahren miteinander verklebt (laminiert) werden.

Die Folie weist eine Wärmeleitfähigkeit von mindestens 0,3 W $m^{-1}$ $K^{-1}$, bevorzugt mindestens 0,35 W $m^{-1}$ $K^{-1}$ und idealerweise 0,45 W $m^{-1}$ $K^{-1}$ auf. Unterhalb von 0,3 W $m^{-1}$ $K^{-1}$ ist der Vorteil, der durch die höhere Wärmeleitfähigkeit erreicht wird, in der Regel nicht mehr ausreichend groß, um den wirtschaftlichen Nachteil, der durch die Einbringung der großen Partikelmengen entsteht, auszugleichen. Diese reduzieren sowohl die mechanische Festigkeit, als auch die Durchschlagspannung der Folie und erhöhen die Kosten der Herstellung sowohl durch ihren eigenen Preis, als auch durch eine Verringerung der Laufsicherheit der Folienanlagen.

Soll der Werkstoff gleichzeitig wärmeleitend und elektrisch isolierend sein, kommen keramische Füllstoffe wie hexagonales Bornitrid (hBN), Aluminiumoxid ($Al_2O_3$) oder Siliciumcarbid (SiC) in Frage. Zur Erreichung einer signifikanten Erhöhung der Wärmeleitfähigkeit sind hohe Füllgrade von mindestens 10 Gew-%, besser noch 20 Gew-% erforderlich.

Bei der Auswahl der geeigneten Partikel zur Erhöhung der Wärmeleitfähigkeit muss die gleichzeitig hohe aufgabengemäße Durchschlagfestigkeit beachtet werden. Daher verbietet sich der Einsatz von Metallpartikeln ebenso wie der von kohlenstoffbasierten Füllstoffen wie Graphit, Ruß, Kohlenstofffasern oder Carbon Nanotubes (CNT). Diese leiten den elektrischen Strom, die geforderte Durchschlagfestigkeit von 90 kV $mm^{-1}$, gemäß DIN40634 (bei 23°C und AC), bei gleichzeitiger guter Wärmeleitfähigkeit ist mit diesen Füllstoffen somit nicht erreichbar. So konnte zwar Graphit in Mengen bis 8 Gew. % in die Folie eingebracht werden, ohne dass die elektrische Durchschlagfestigkeit nennenswert sank, aber bei diesen Gehalten wurde keine Erhöhung der Wärmeleitfähigkeit erreicht.

Weitere Füllstoffe wie zum Beispiel das BeO scheiden aufgrund ihrer hohen Toxizität aus. Periclase und MgO-Spinelle erwiesen sich ebenfalls als ungeeignet, da diese mit den erfindungsgemäßen Polyestern reagieren und sowohl zu einem starken Molekulargewichtsabfall (Hydrolyse) des Polyesters führen (daher ist die Herstellung der Folie unmöglich), als auch das Partikel selbst durch die oberflächliche Umwandlung der MgO-Komponente in $Mg(OH)_2$ deutlich an Wärmeleitfähigkeit verliert.

Sowohl Bornitrid, als auch Aluminiumnitrid, als auch Siliziumcarbid sind als alleinige Wärmeleitfähigkeitspartikel ungeeignet, da diese keine gute Einbindung in die Polymermatrix aufweisen. Die geringe Kompatibilität führt bei der Streckung zu luftgefüllten Bläschen (Voids) um die Partikel welche als zusätzlicher Isolator in der Folie wirkt und die Wärmeleitfähigkeit dadurch entweder gar nicht oder nur sehr geringfügig ansteigt. Aufgrund der inerten Struktur des hBN (hexagonales BN) können die Wechselwirkungen an der Grenzfläche auch mit Hilfe von Verträglichkeitsvermittler (wie bspw. Aminosilane) nicht signifikant erhöht werden. Solche Verträglichkeitsermittler können bei hBN keine ausreichende Wechselwirkung, sei es durch kovalente Bindung oder durch Van-Der-Waals-Kräfte, aufbauen.

Pures Aluminiumoxid (Korundium) führt aufgrund seiner hohen Härte (ca. 9 Mohshärte) zu einem starken Abrieb an den Folienextrusionswerkzeugen, wenn es in den zur Erhöhung der Wärmeleitfähigkeit notwendigen Mengen (min. 10 Gew.-%) eingesetzt wird. Bereits nach wenigen Minuten der Extrusion waren Metallpartikel (elektrisch leitfähig) in erheblichen Mengen in der Folie nachweisbar.

Ähnlich wie Korund entsteht durch den Einsatz von Rutil ein erhöhter Abrieb an den Folienextrusionswerkzeugen, der jedoch noch in einer tolerierbaren Größenordnung liegt. Wie Bornitrid bildet sich aber auch beim Einsatz von Rutil ein Bläschen um Teile des Partikels, sodass durch den Einsatz von Rutil keine erhöhte Wärmeleifähigkeit erreicht werden konnte.

Als geeignet erwiesen haben sich hingegen Kyanit und/ oder Cristobalit (amorphe Silikate und Alumosilikate führen nicht zu einer Erhöhung der Wärmeleitfähigkeit).

Cristobalit ist z.B. als Füllstoff von der Quarzwerke GmbH unter dem Markennamen Silbond® Cristobalit (z.B. 8000 RST) erhältlich. Der Füllstoff weist in allen Richtungen die gleiche Wärmeleitfähigkeit auf und ist somit besonders gut für Folien geeignet. Die Härte von ca. 6,5 Mohshärte ist vergleichbar mit der von Glasfasern. Aufgrund der kubischen Füllstoffform ist das Verschleißverhalten des Füllstoffs gegenüber Glasfasern allerdings als deutlich geringer zu bewerten.

Neben dem Cristobalit besteht das wärmeleitfähige Partikel in einer bevorzugten Ausführungsform aus Kyanit. Kyanit erwies sich aufgrund seiner hohen Wärmeleitfähigkeit in allen Achsen und seiner verhältnismäßig geringen Härte von 4,5 - 7 Mohshärte (Abhängig von der Kristallrichtung) und vor allem seiner guten Einbindung in die Polyestermatrix als besonders geeignet. Geeignete Kyanitpartikel sind z.B. von Quarzwerken GmbH (Frechen, Deutschland) unter dem Markennamen Silatherm® erhältlich.

Die erfindungsgemäßen Partikel können mit und ohne Oberflächenmodifizierung eingesetzt werden. Als Oberflächenmodifizierung werden bevorzugt Methacrylsilane, Trimethylsilane und Methylsilane und besonders bevorzugt Epoxysilane und Aminosilane eingesetzt. Durch die Oberflächenmodifikation kann die Einbindung in die Polyestermatrix weiter verbessert werden, was zu einer weiteren Reduktion der Void-Bildung führt. Weiterhin verbessert eine Oberflächenmodifikation auch die Gleichmäßigkeit der Verteilung in der Polyestermatrix. Dies wirkt sich zudem positiv auf die mechanischen Eigenschaften wie Zugfestigkeit, E-Modul, Bruchdehnung, Reißdehnung und Schlagzähigkeit aus.

Es hat sich als günstig erwiesen, wenn der d50 der Partikel bei < 15 $\mu$m, bevorzugt bei < 10 und besonders bevorzugt bei < 6 $\mu$m liegt. Bevorzugt liegt der d50 dabei oberhalb von 0,1 $\mu$m und besonders bevorzugt von oberhalb 0,5 $\mu$m. Einerseits verbessert dies die Laufsicherheit der Folienanlage mit abnehmender Partikelgröße und führt zudem zu einer höheren Wärmeleitfähigkeit. Unterhalb eines d50 von 500 nm und besonders stark unterhalb von 100 nm reduziert sich die Wärmeleitfähigkeit überraschenderweise wieder.

Für eine gute Extrusion und Folienverarbeitung ist zudem zu beachten, dass der d98 der Partikel bei < 40 $\mu$m, bevorzugt bei < 25 $\mu$m und besonders bevorzugt bei < 15 $\mu$m liegt. Liegt der d98 bei > 40 $\mu$m, bewirkt die größte Partikelfraktion Abrisse im Reckprozess. Im Extrusionsprozess zum Aufschmelzen des Polymers ergeben sich Schwankungen in der Schmelzeviskosität und des Schmelzedrucks. Der Schmelzefilm unterliegt in der Folge Breitenschwankungen, was die Einführung der Folie in die Kluppenkette des Kombirahmens erschwert.

Der Anteil der zur Wärmeleitfähigkeitserhöhung eingebrachten Partikel liegt bei mindestens 10 Gew.-%, bevorzugt bei mindestens 12 Gew.-% und idealerweise bei mindestens 13 Gew.-%. Eine weitere Erhöhung führt zu einer weiteren Verbesserung der Wärmeleitfähigkeit, jedoch auch zu einer deutlichen Verschlechterung der Reißdehnung und der elektrischen Durchschlagfestigkeit. Daher liegt der Anteil der erfindungsgemäß eingesetzten Partikel bei kleiner 45 Gew.-%, bevorzugt bei kleiner 40 Gew.-% und idealerweise bei kleiner 37 Gew.-%.

Überraschenderweise führt zwar Bornitrid aus den oben beschrieben Gründen bei Verwendung als alleiniges wärmeleitfähiges Partikel nicht zu einer nennenswerten Erhöhung zu einer Wärmeleitfähigkeit der Folie. In Kombination mit den erfindungsgemäßen, kristallinen Partikeln kann jedoch eine weitere Erhöhung der Wärmeleitfähigkeit erreicht werden. In einer bevorzugten Ausführungsform werden daher 10 - 30 Gew.-%, bevorzugt 12 - 25 Gew.-% eines erfindungsgemäßen Silikat-Partikels mit 5 - 15, bevorzugt mit 6 - 10 Gew.-% eines hexagonalen Bornitrid-Partikels kombiniert. Es hat sich als Vorteilhaft erwiesen, wenn die Partikelgröße ($d_{50}$) des Bornitrids < 15 $\mu$m, bevorzugt < 6 $\mu$m und idealerweise < 3 $\mu$m ist. Ein geeignetes Partikel ist z.B. NX1 der Firma Momentive-Materials. Üblicherweise wird mit der Zugabe des Bornitrids in der genannten Menge eine Erhöhung der Leitfähigkeit um 0,1 W $m^{-1}$ $K^{-1}$ gegenüber dem Einsatz von ausschließlich Silkatpartikeln erzielt. Die Verwendung von Bornitrid als Zusatzpartikel führt zu einer geringfügigen Verschlechterung der Reißdehnung und Durchschlagfestigkeit als bei Zugabe der gleichen Menge an weiterem kristallinem Silikatpartikel. Ein Nachteil der Zugabe von Bornitrid ist aber der hohe Preis dieser Partikel verglichen mit den Silikatpartikeln.

Die Folie ist entweder ein oder mehrschichtig, wobei bei mehrschichtigen Aufbauten darauf geachtet werden muss, dass die erfindungsgemäßen Silikatpartikel möglichst gleichmäßig auf die jeweiligen Schichten verteilt sind. Zur Erhöhung der Folienstabilität (bei simultaner Reduktion der Wärmeleitfähigkeit) kann die Konzentration der erfindungsgemäßen Silikatpartikel in den Außenschichten, bei gleichzeitiger Erhöhung der Silikatpartikel in der/den, durch die Außenschichten eingeschlossenen Innenschicht/en, reduziert werden, wobei mindestens 90 % der Foliendicke durch mindestens eine oder mehrere Innenschichten repräsentiert wird. Dabei muss darauf geachtet werden, dass der gesamte Gehalt an wärmeleitfähigem Füllstoff innerhalb des erfindungsgemäßen Bereichs von 10 - 45 Gew. % (bezogen auf Masse aller Schichten) liegt.

In einer bevorzugten Ausführungsform ist die Folie einschichtig, da bei einschichtigen Ausführungsformen die

homogene Verteilung des erfindungsgemäßen wärmeleifähigen Füllstoffs besonders effizient realisiert werden kann.

In einer weiteren bevorzugten Ausführungsform ist die Folie mindestens zweischichtig, wobei mindestens eine dieser Schicht weniger als 10 % der Gesamtdicke ausmacht, wobei diese Schicht eine Deckschicht (Außenschicht) darstellt und weniger als 10 Gew.-% der erfindungsgemäßen Silikatpartikeln und bevorzugt weniger als 5 Gew.-% der erfindungsgemäßen Silikatpartikeln enthält.

Dies bewirkt zwar eine geringfügige Verschlechterung der Wärmeleitfähigkeit der Folie, führt aber zu einer deutlichen Verbesserung der Reißdehnung und Durchschlagfestigkeit der Folie.

Die Folie besteht zu mindesten 50 Gew.-%.aus einer polymeren Komponente Die polymere Komponente der Folie bzw. der Basisschicht B und der gegebenenfalls übrigen Schichten der Folie besteht zu mindestens 75 Mol.-% aus einem thermoplastischen Polyester. Neben dem thermoplastischen Polyester können weitere Polymere wie z.B. Polyamide, Polyimide, Polyetherimide (wie z.B. Ultem® von Sabic) oder Polycarbonate enthalten sein. Diese führen jedoch bis auf Polyetherimide fast immer aufgrund ihrer schlechten Mischbarkeit mit Polyestern zu einer deutlich verschlechterten Laufsicherheit und Wärmeleitfähigkeit, oder zu deutlich erhöhten Kosten (wie insbesondere bei Polyetherimiden). Daher besteht die Polymere Komponente bevorzugt zu mehr als 85 und idealerweise zu mehr als 95 Mol % aus einem thermoplastischen Polyester.

Der thermoplastische Polyester besteht bevorzugt aus Ethylenglykol und Terephthalsäure (= Polyethylenterephthalat, PET), aus Ethylenglykol und Naphthalin-2,6-dicarbonsäure (= Polyethylen-2,6-naphthalat, PEN), sowie aus beliebigen Mischungen der genannten Carbonsäuren und Diole. Besonders bevorzugt sind Polyester, die zu mindestens 80 Mol-%, bevorzugt mindestens 83 Mol-% und idealerweise zu mindestens 88 Mol-% aus Ethylenglykol- und Terephthalsäure-Einheiten bestehen. Der Einsatz von Naphthalin-2,6-dicarbonsäure hat gegenüber dem Einsatz von Terephthalsäure den Vorteil einer höheren Dauerwärmebeständigkeit, bei deutlich höherem Rohmaterialpreis, so dass bedingt durch den höheren Preis von Naphthalin-2,6-dicarbonsäure üblicherweise auf diese verzichtet werden kann. Die restlichen Monomereinheiten werden als Co-Monomere bezeichnet und stammen aus anderen aliphatischen, cycloaliphatischen oder aromatischen Diolen bzw. Dicarbonsäuren. Geeignete andere aliphatische Diole sind beispielsweise Diethylenglykol, Triethylenglykol, aliphatische Diole der allgemeinen Formel $HO\text{-}(CH_2)_n\text{-}OH$, wobei *n* bevorzugt kleiner 10 ist, Cyclohexandimethanol, Butandiol, Propandiol, etc. Geeignete andere Dicarbonsäuren sind z.B. Isophthalsäure, Adipinsäure etc. Es hat sich als günstig für die Dauerwärmebeständigkeit erwiesen, wenn die Diol-Komponente des thermoplastischen Polyesters weniger als 5 Mol.-%, bevorzugt weniger als 3 Mol.-% Diethylenglykol darstellt. Es hat sich aus den gleichen Gründen als günstig erwiesen, wenn die Dicarbonsäure-Komponente des thermoplastischen Polyesters weniger als 12 Mol.-%, bevorzugt weniger als 10 und idealerweise weniger als 6 Mol.-% Isophthalsäure (IPA) darstellt. Es hat sich weiterhin als günstig erwiesen, wenn die Diol-Komponente des thermoplastischen Polyesters weniger als 2 Mol.-%, idealerweise weniger als 1 Mol.-% CHDM (1,4-Cyclohexandimethanol) darstellt. Die Streckbarkeit und die Einbindung der Partikel werden jedoch durch den Einsatz von Comonomeren wie Isophthalsäure und Diethylenglycol verbessert. In einer bevorzugten Ausführungsform liegt der Diethylenglycol-Anteil daher bei mindestens 0,6, bevorzugt bei mindesten 0,9 und idealerweise bei mindestens 1,3 Mol-% Diethylenglycol, bezogen auf die Diolkomponente des thermoplastischen Polyesters. Aus demselben Grund liegt der Isophthalsäuregehalt, bezogen auf die Dicarbonsäurekomponente, in einer bevorzugten Ausführungsform bei mindestens 1, bevorzugt bei mindestens 1,5 und idealerweise bei mindestens 2 Mol-%.

Grundsätzlich wurde festgestellt, dass eine Erhöhung der bevorzugten Comonomere Isophthalsäure und Diethylenglycol bis zu den maximalen Grenzen zu einer Verbesserung der Wärmeleitfähigkeit führt, gleichzeitig verschlechtert sich aber der RTI-Wert und die Durchschlagfestigkeit.

Für die Laufsicherheit der Folie und insbesondere für das Erreichen der erfindungsgemäßen Werte beim RTI ist der SV-Wert der Folie von großer Bedeutung. Der Mittelwert des SV-Wertes der eingesetzten Polyesterrohstoffe liegt daher bei mindestens 600, bevorzugt bei mindestens 700 und insbesondere bei mindestens 750. Im Mittel liegt der SV-Wert der eingesetzten Rohstoffe bei kleiner 1000 SV und bevorzugt bei kleiner 950 SV, und insbesondere bei kleiner 920 SV. Liegt der Wert über 1000, so ist auf herkömmlichen Polyesterfolienanlagen in der Regel keine wirtschaftliche Produktion mehr möglich, da die Extruder ihre maximalen Stromaufnahmen bei den üblichen Durchsätzen überschreiten und daher die Durchsätze stark reduziert werden müssen. Ab einem mittleren SV von 920 steigt aufgrund der hohen Scherung der SV-Abbau im Extruder stark an. Je stärker der Anteil an abgebautem Polymer in der Folie ist, desto geringer wird der erreichbare RTI. Daher liegt der Abbau (Mittlerer SV der Einsatzrohstoffe minus SV-Wert der Folie) bei kleiner 150, bevorzugt bei kleiner 100 und insbesondere bei kleiner 50 SV-Einheiten (siehe hierzu auch Bedingungen des Herstellungsprozesses).

Neben dem erreichbaren Folien SV und dem geringen Abbau kann der RTI durch weitere Maßnahmen positiv beeinflusst werden. Insbesondere wenn in der Herstellung des Polyesters auf Antimonverbindungen als Katalysator verzichtet wird, hat es sich als günstig erwiesen, wenn der Folie 100 -5000 ppm eines Radikalfängers (ein Thermooxidationsstabilisator) zugegeben wird, wobei der Gehalt bevorzugt zwischen 400 - 2000 ppm und insbesondere zwischen 500 -1200 ppm liegt. Niedrigere Gehalte als 50 ppm führen zu keiner messbaren Verbesserung der thermischen Stabilität und höhere als 5000 ppm haben keine weitere verbessernde Wirkung auf die thermische Stabilität der Folie und verringern

daher nur die Wirtschaftlichkeit. Gehalte oberhalb von 1200 ppm führen zudem tendenziell zur Bildung von Gelen mit hohem Stabilisatorgehalt und einem Gelbstich.

Als Radikalfänger kann sowohl bevorzugt eine Verbindung, oder weniger bevorzugt eine Mischung verschiedener Radikalfänger eingesetzt werden.

Der/die verwendete(n) Radikalfänger werden bevorzugt aus der Gruppe der phenolischen Antioxidantien, bzw. aus der Gruppe der Antioxidantien ausgewählt, die mindestens das folgende Strukturelement enthalten

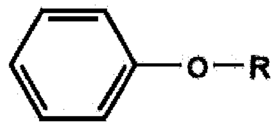

R = diverse organische Reste, siehe folgende Stoffbeispiele.

Die nachfolgenden Verbindungen weisen eine niedrige Toxizität und gute Eigenschaften als Radikalfänger auf und sind daher bevorzugte Radikalfänger im Sinne der Erfindung:
5,7-Di-tert-butyl-3-(3,4- und 2,3-Dimethylphenyl)-3H-benzofuran-2-on (enthaltend a) 5,7-Di-tert-butyl-3-(3,4-dimethylphenyl)-3H-benzofuran-2-on (80 bis 100 Gew.-%) und b) 5,7-Di-tert-butyl-3-(2,3-dimethylphenyl)-3H-benzofuran-2-on (0 bis 20 Gew.-%), CAS-Nr. 88-24-4 = 2,2'-Methylen bis(4-ethyl-6-tert-butylphenol), CAS-Nr. 96-69-5 = 4,4'-Thiobis(6-tert-butyl-3-methylphenol), CAS-Nr. 119-47-1 = 2,2'-Methylen-bis(4-methyl-6-tertbutylphenol), CAS-Nr. 128-37-0 = 2,6-di-tert-butyl-p-cresol, CAS-Nr. 991-84-4 = 2,4-Bis(octylmercapto)-6-(4-hydroxy-3,5-di-tert-butylanilino)-1,3,5-triazin, CAS-Nr. 1709-70-2 = 1,3,5-Trimethyl-2,4,6-tris(3,5-di-tert-butyl-4-hydroxybenzyl)-benzol, CAS-Nr. 1843-03-4 = 1,1,3-tris(2-methyl-4-hydroxy-5-tert-butylphenyl) butane, CAS-Nr. 2082-79-6 = octadecyl 3-(3,5-di-tert-butyl-4-hydroxyphenyl)propionate, CAS-Nr. 3135-18-0 = 3,5-di-tert-butyl-4-hydroxybenzylphosphonic acid, dioctadecyl ester, CAS-Nr. 4130-42-1 = 2,6-di-tert-butyl-4-ethylphenol, CAS-Nr. 6683-19-8 = pentaerythritol tetrakis[3-(3,5-di-tertbutyl-4-hydroxyphenyl)-propionate), CAS-Nr. 23128-74-7 = 1,6-hexamethylene-bis(3-(3,5-di-tert-butyl-4-hydroxyphenyl) propionamide), CAS-Nr. 25013-16-5 = tert-Butyl-4-hydroxyanisol, CAS-Nr. 27676-62-6 = 1,3,5-Tris(3,5-di-tert-butyl-4-hydroxybenzyl)-1,3,5-triazin-2,4,6(1H,3H,5H)-trion, CAS-Nr. 32509-66-3 = Ethylenglykolbis[3,3bis(3-tert-butyl-4-hydroxyphenyl)butyrat], CAS-Nr. 32687-78-8 = N,N'-Bis(3-(3,5-di-tert-butyl-4-hydroxyphenyl)propionyl)hydrazid, CAS-Nr. 35074-77-2 = 1,6-Hexamethylenbis(3-(3,5-di-tert-butyl-4-hydroxyphenyl)propionat), CAS-Nr. 35958-30-6 = 1,1-Bis(2-hydroxy-3,5-di-tert-butylphenyl)ethan, CAS-Nr. 36443-68-2 = Triethyleneglycolbis[3-(3-tert-butyl-4-hydroxy-5-methylphenyl)propionat], CAS-Nr. 36443-68-2 = Triethyleneglykol-bis[3-(3-tert-butyl-4-hydroxy-5-methylphenyl)propionat], CAS-Nr. 40601-76-1 = Thiodiethanol-bis(3-(3,5-di-tert-butyl-4-hydroxyphenyl)propionat), CAS-Nr. 57569-40-1 = Terephthalsäure, Diester mit 2,2'-Methylenbis(4-methyl-6-tert-butylphenol), CAS-Nr. 61167-58-6 = Acrylsäure, 2-tert-Butyl-6-(3-tert-butyl-2-hydroxy-5-methylbenzyl)-4-methylphenylester, CAS-Nr. 65140-91-2 = 3,5-Di-tert-butyl-4-hydroxybenzylphosphonsäure-monoethylester, Calciumsalz, CAS-Nr. 70331-94-1 = 2,2'-Oxamidobis[ethyl-3-(3,5-di-tert-butyl-4-hydroxyphenyl)-propionat], CAS-Nr. 110553-27-0 = 2,4-bis(octylthiomethyl)-6-methylphenol, CAS-Nr. 110675-26-8 = 2,4-Bis(dodecylthiomethyl)-6-methylphenol.

Radikalfänger mit dem erfindungsgemäßen Strukturelement sollten ein Molekulargewicht oberhalb von 300 g/Mol und besonders bevorzugt von oberhalb 500 g/Mol aufweisen und idealerweise oberhalb von 700 g/Mol aufweisen, da Verbindungen mit niedrigeren Molekulargewichten unter den für Polyester typischen Verarbeitungstemperaturen eine zu hohe Flüchtigkeit aufweisen und so bei der Folienherstellung teilweise abdampfen. Dies kann zu Problemen bei der Herstellung führen (Dampfentwicklung, Geruch, Blasenbildung in der Folie etc.) und hat zudem den Nachteil einer höheren Migrationstendenz - aus der Folie. Dies gilt u.a. für die in der obigen Liste genannten Verbindungen mit den CAS-Nummern: 2082-79-6, 25013-16-5, 128-37-0. Verbindungen mit einem Molekulargewicht unterhalb von 300 g/Mol werden daher bevorzugt zu weniger als 500 ppm und besonders bevorzugt zu weniger als 300 ppm und idealerweise gar nicht eingesetzt. Verbindungen mit einem Molekulargewicht unterhalb von 500 g/Mol werden daher bevorzugt zu weniger als 1000 ppm und besonders bevorzugt zu weniger als 500 ppm und idealerweise gar nicht eingesetzt.

Verbindungen aus der obigen Liste, die Stickstoff enthalten, führten bei der Verwendung zu Folien mit höheren Gelbwerten. Dies ist unerwünscht; daher werden Radikalfänger mit Stickstoff in der Summenformel bevorzugt zu weniger als 1000 ppm, besonders bevorzugt zu weniger als 500 ppm und idealerweise gar nicht eingesetzt.

Radikalfänger mit Schwefel in der Summenformel wiesen bei der Herstellung der Folie einen charakteristischen, als eher unangenehm empfundenen Geruch auf und sind daher weniger bevorzugt. Radikalfänger mit Schwefel in der Summenformel werden bevorzugt zu weniger als 500 ppm, besonders bevorzugt zu weniger als 300 ppm und idealerweise gar nicht eingesetzt.

Besonders gute Eigenschaften hinsichtlich Thermostabilität, geringer Migration aus der Folie und Gelbfärbung wiesen die Verbindungen mit den CAS-Nr. 1709-70-2, 3135-18-0, 6683-19-8 und 57569-40-1 auf. Diese sind bevorzugte Radikalfänger im Sinne der Erfindung. Besonders bevorzugt sind dabei aus den genannten Gründen die Verbindungen mit den CAS-Nr. 1709-70-2 und 6683-19-8.

Der/die Radikalfänger können dem Polyester sowohl direkt bei der Polymerherstellung, als auch später durch Einarbeiten der Verbindungen in einen fertigen Polyester zugegeben werden. Bei der Einarbeitung in einen fertigen Polyester hat sich CAS-Nr. 1709-70-2 (Irganox 1330) als besonders geeignet erwiesen, da hierbei keine Blasenbildung oder Dampfentwicklung beobachtet wurde.

Weiterhin hat es sich als günstig für das Erreichen eines erfindungsgemäßen RTI erwiesen, wenn der thermoplastische Polyester der Folie einen niedrigen Carboxylendgruppengehalt (CEG) aufweist. Dieser liegt in einer bevorzugten Ausführungsform bei kleiner 40 mmol/kg Folie und besonders bevorzugt bei kleiner 30 mmol/kg und idealerweise bei kleiner 27 mmol/kg. Niedrige Carboxylendgruppengehalte können z.B. durch Verwendung von Polyesterrohstoffen mit Carboxylendgruppengehalten von kleiner 20 mmol/kg Rohstoff und anschließende schonende Extrusion erreicht werden. Schonende Extrusion heißt dabei, niedrige Temperatur möglichst unter 300 °C in den Austragszonen der verwendeten Extruder und hohe Füllgrades des Extruders bei niedriger Drehzahl (gilt für Zweischneckenextruder) bzw. guter Vortrocknung (Einschneckenextruder) und Entgasung der Schmelze (Zweischneckenextruder). Der niedrige CEG-Wert kann bevorzugt auch über eine Katalytische-Decaboxilierung wie z.B. in EP2251371 beschrieben erreicht werden. Weniger bevorzugt ist die Einstellung von niedrigen CEG-Gehalten mittels Hydrolyseschutzmittelzugabe wie beispielsweise in EP2184311 beschrieben.

Für das Erreichen der erfindungsgemäßen RTI-Werte und den erfindungsgemäßen Durchschlagfestigkeiten ist es von großer Bedeutung, dass die Folie mindestens uniaxial orientiert wird. Je höher das Flächenstreckverhältnis (Streckung MD x TD; Maschinen-Richtung = MD, Transversale-Richtung = TD) desto höher der RTI-Wert. Ab einem Flächenstreckverhältnis von 16 erhöht sich der RTI-Wert nicht mehr weiter. Unterhalb von einem Flächenstreckverhältnis von 2 können weder die erfindungsgemäßen RTI-Werte noch die erfindungsgemäße Durchschlagfestigkeit erreicht werden. Je höher das Flächenstreckverhältnis ist, desto geringer ist die Wärmeleitfähigkeit durch die Folie. Das Flächenstreckverhältnis liegt daher bei mindestens 2 und bevorzugt bei mindestens 3 und idealerweise bei mindestens 5. In einer bevorzugten Ausführungsform liegt das Flächenstreckverhältnis bei unterhalb von 16, besonders bevorzugt bei unterhalb von 14 und idealerweise bei unterhalb von 13. Wenn Flächenstreckverhältnisse von größer 9 verwendet werden, hat es sich als günstig erwiesen, wenn der Co-Monomeranteil der Folie (Summe aus DEG und IPA) bei mindestens 1,6 Mol-% liegt.

Die Reißdehnung der Folie liegt in längs und Querrichtung bei größer 5 %, besonders bevorzugt bei größer als 15 % und idealerweise bei größer 20 %. Wenn die Reisdehnung unterhalb von 5 % liegt, kann die Folie in der Weiterverarbeitung wie z.B. bei der Faltung in Motorfolie (Isolierfolie im Motor) leicht brechen und wäre damit für die meisten Anwendungen nicht mehr verwendbar. Je höher der Partikelgehalt, desto geringer ist die Reißdehnung. Oberhalb von einem Partikelgehalt von 45 Gew.-% sind die erfindungsgemäßen Reißdehnungen nicht mehr erreichbar.

Das E-Modul liegt in mindestens einer Folienrichtung bei mindestens 1000 N $mm^{-2}$ bevorzugt bei mindestens 1500 N $mm^{-2}$ und besonders bevorzugt bei mindestens 2000 N $mm^{-2}$. Besonders bevorzugt werden diese Werte in beiden Folienrichtungen erreicht. Bei einem E-Modul von kleiner 1000 N $mm^{-2}$ besteht in Weiterverarbeitungsprozessen die Gefahr einer zu starken Verdehnung der Folie, die zu einer deutlichen Abnahme der elektrischen Durchschlagfestigkeit führt.

Die erfindungsgemäße Polyesterfolie hat eine Durchschlagfestigkeit von mindestens 90 kV $mm^{-1}$, bevorzugt mindesten 100 kV $mm^{-1}$ und idealerweise 110 kV $mm^{-1}$. Erreicht wird die erfindungsgemäße Durchschlagfestigkeit durch das Einstellen der Flächenstreckverhältnissen im erfindungsgemäßen Bereich, wobei die Durchschlagfestigkeit bis zu einem Flächenstreckverhältnis von 5 ansteigt, aber oberhalb von 12 wieder zurück geht. Die Durchschlagfestigkeit wird weiterhin durch die gezielte Auswahl der Comonomere (Stoffmengenverhältnis) im erfindungsgemäßen Bereich eingestellt. Insbesondere oberhalb der erfindungsgemäßen Comonomergehalte geht die Durchschlagfestigkeit deutlich zurück. Werden Gehalte an wärmeleitfähigen Partikeln oberhalb der erfindungsgemäßen Bereiche eingesetzt, so kann die erfindungsgemäße Durchschlagfestigkeit nicht erreicht werden.

Die erfindungsgemäße Polyesterfolie weist einen Relativen Temperatur Index (RTI-Wert) von mindestens 90 auf. Der RTI-Wert korreliert mit der Temperatur in °C bei die Folie im Dauereinsatz versagt. Der RTI-Wert der Folie liegt bei mindestens 90 bevorzugt bei mindestens 95 und idealerweise bei 105. Ähnlich wie die Durchschlagfestigkeit steigt der RTI-Wert mit steigendem Streckverhältnis an und sinkt mit steigendem Comonomeranteil. Innerhalb der erfindungsgemäßen Bereiche dieser Werte werden die erfindungsgemäßen RTI-Werte erreicht.

Der RTI-Wert wird wie oben beschrieben weiterhin positiv beeinflusst, durch die Verwendung von Thermooxidationsstabilisatoren und die Verwendung von hydrolysestabilen Rohstoffen oder Stabilisatoren.

Die erfindungsgemäße Folie eignet sich hervorragend für die Verwendung in Rückseitenlaminaten von Solarmodulen, wobei die Folie in diesem Fall eine Dicke von min. 100 μm aufweist. Durch die Verwendung der Folie wird mehr Wärme von den Zellen abgeführt deren Temperatur dadurch sinkt und der Wirkungsgrad des Moduls zunimmt. Eine der Hauptanwendungen der erfindungsgemäßen Folie ist die Verwendung als Motorfolie zur Elektroisolation von Elektromotoren. In dieser Anwendung ist die Folie mindestens 96 μm und bevorzugt mehr als 150 μm dick. Die Wärme kann so schneller aus dem Motor abgeführt werden, wodurch der Widerstand in der Motorspule sinkt und der Motor weniger Strom verbraucht. Zudem wird eine Überhitzung des Motors vermieden. Weitere Anwendung findet die Folie

unter anderem in elektrischen Kleingeräten wie Laptops und Mobiltelefonen als flächiges Isolationsmaterial, wobei die Dicke hier in der Regel unter 50 µm liegt. Weitere Anwendungen liegen in Klimaanlagen, Heizsystemen aller Art und Leuchtmitteln wie LED-Lampen.

Neben der Wärmeleitfähigkeit der Folie selbst, sind auch die Oberfläche und der Kontakt zum nächsten Medium für die Wärmeabfuhr von entscheidender Bedeutung. Der Kontakt zwischen Folie und nächster Oberfläche sollte möglichst lückenfrei und ohne Einschluss von Luft sein. Es stellte sich als vorteilhaft dar, wenn der Kontakt mit einem Harz, einem Kleber, einer Paste, einer Schmelzklebefolie oder ähnlichem hergestellt wird. Das Kontaktmedium wird dabei beispielsweise aufgeschmolzen, um Unebenheiten und Mikrorauheiten auszufüllen. Auch hier erweist sich der Zusatz von wärmeleitenden Partikeln, wie sie bereits beschrieben wurden, als hilfreich, so dass das Kontaktmedium nicht wiederum als Wärmeisolator fungiert. Da diese Schicht nicht als elektrischer Isolator fungiert und nicht wie die Polyesterfolie im Herstellprozess orientiert werden muss, ergeben sich weniger Einschränkungen bei der Auswahl der Partikel. Gleichfalls sind je nach chemischer Natur des Kontaktmediums keine Einschränkungen bezüglich Abbaureaktionen mit dem Polyester mehr zu beachten.

In einer Form der Erfindung wird die modifizierte Polyesterfolie mit einem beschriebenen Kontaktmedium versehen, um den Kontakt und damit die Wärmeabfuhr zur nächsten Fläche zu verbessern. Diese Fläche ist bei Rückseitenlaminaten beispielsweise das Einkapselungsmaterial, etwa aus EVA oder Silikon, oder bei Motorisolationen ein weiteres Isolationsmaterial zur Verbesserung der Wärmeklasse.

## Verfahren zur Herstellung

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 600 sein muss und bevorzugt unter 1000 liegt.

Die Wärmeleitpigmente, sowie die gegebenenfalls vorhandenen weiteren Additive können bereits bei der Herstellung des Polyesters zugegeben werden. Hierzu werden die Partikel im Diol dispergiert, gegebenenfalls gemahlen, dekantiert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Mol.-% Polyester enthalten. Insbesondere das Silikat-Partikel enthaltende Masterbatch sollte nicht mehr als 50 Mol.-%ig an Silikat sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die Schmelze sollte an den jeweiligen Extruderausgängen nicht wärmer als 305 °C sein und bevorzugt nicht wärmer als 300 °C sein, da dadurch das Erreichen der erfindungsgemäßen RTI-Werte erleichtert wird. Erreicht werden diese Temperaturen durch Kühlung der Austragszonen der Extruder und/oder durch Einstellen einer Niedrigen Extruderdrehzahl bei gleichzeitigem hohen Füllgrad des Extruders (gilt für Zweischneckenextruder).

Die erfindungsgemäße Folie wird mindestens uniaxial orientiert, d.h. mindestens uniaxial gestreckt. Im Falle einer biaxialen Verstreckung der Folie wird die Verstreckung am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140 °C (Ende der Streckung) durchgeführt. Zum Erreichen der gewünschten Folieneigenschaften hat es sich als vorteilhaft erwiesen, wenn die Strecktemperatur (in MD und TD) unter 125 °C und bevorzugt unter 118 °C liegt. Vor der Querstreckung können eine oder beide Oberfläche(n) der Folie nach den an sich bekannten Verfahren In-Line beschichtet werden. Die In-Line-Beschichtung kann beispielsweise zum Aufbringen einer Haftvermittlung genutzt werden, oder zur Aufbringung einer Beschichtung benutzt werden. Bei der nachfolgenden Thermofixierung wird die Folie über eine Zeitdauer von etwa 0,1 bis 10 s unter Spannung bei einer Temperatur von 150 bis 250 °C gehalten und zum Erreichen der gewünschten Schrumpf- und Längungswerte um mindestens 1 %, bevorzugt mindestens 3 % und besonders bevorzugt mindestens 4 % in Querrichtung relaxiert, sofern eine Querorientierung ausgeführt wurde. Diese Relaxation findet bevorzugt in einem Temperaturbereich von 150 bis 190 °C statt. Anschließend wird die Folie in üblicher Weise aufgewickelt.

**Weitere Folieneigenschaften**

Die erfindungsgemäße Folie nach dem oben beschrieben Verfahren weist bevorzugt bei 150 °C einen Schrumpf in Längs- und Querrichtung von unter 6 %, bevorzugt unter 2 % und besonders bevorzugt von unter 1,5 % auf. Diese Folie weist weiterhin bei 100 °C eine Ausdehnung von weniger als 3, bevorzugt von weniger als 1 und besonders bevorzugt von weniger als 0,3 % auf. Diese Formstabilität kann beispielsweise durch geeignete Relaxation der Folie vor dem Aufwickeln erhalten werden (s. Verfahrensbeschreibung). Diese Formstabilität ist wichtig, um bei der Verwendung in Motoren ein Nachschrumpfen der Streifen zu vermeiden, welches zu einer mangelnden elektrischen Isolation an den Kanten des Motors führen könnte.

**Analytik**

Zur Charakterisierung der Rohstoffe und der Folien wurden die folgenden Messwerte benutzt:

**Messung des mittleren Partikel-Durchmessers** $d_{50}$

Die Bestimmung des mittleren Durchmessers $d_{50}$ wird mittels Malvern Master Sizer 2000 am einzusetzenden Partikel durchgeführt.

Die Proben werden dazu in eine Küvette mit Wasser gegeben und diese dann in das Messgerät gestellt. Mittels Laser wird die Dispersion und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50% Ordinatenwertes mit der Summenkurve liefert auf der Abszissenachse den gewünschten $d_{50}$-Wert. Analog definiert sich der $d_{98}$-Wert aus dem Schnittpunkt des 98% Ordinatenwertes.

**SV-Wert (standard viscosity)**

Die Standardviskosität in verdünnter Lösung (SV) wurde, angelehnt an DIN 53728 Teil 3, in einem Ubbelohde Viskosimeter bei (25 $\pm$ 0,05)°C gemessen. Dichloressigsäure (DCE) wurde als Lösemittel verwendet. Die Konzentration des gelösten Polymers betrug 1 g Polymer / 100 ml reines Lösemittels. Die Auflösung des Polymers erfolgte 1 Stunde bei 60°C. Wurden die Proben nach dieser Zeit nicht vollständig gelöst, wurden noch bis zu zwei Auflösungsversuche für jeweils 40 Min bei 80°C durchgeführt und die Lösungen anschließend 1 Stunde bei einer Drehzahl von 4100 $min^{-1}$ zentrifugiert.

Aus der relativen Viskosität ($\eta_{rel} = \eta / \eta_s$) wird der dimensionslose SV-Wert wie folgt ermittelt:

$$SV = (\eta_{rel}-1) \times 1000$$

Der Anteil an Partikeln in der Folie bzw. Polymerrohstoff wurde mittels Aschebestimmung ermittelt und durch entsprechende Mehreinwaage korrigiert. D.h.:

Einwaage = (Einwaage entsprechend 100% Polymer) / [(100-Partikelgehalt in Gew.-%)/100 )]

**Mechanische Eigenschaften**

Die mechanischen Eigenschaften wurden über Zugprüfung angelehnt an DIN EN ISO 572-1 und -3 (Probekörper Typ 2) an 100 mm x 15 mm großen Folienstreifen bestimmt.

**Schrumpf**

Der thermische Schrumpf wurde an quadratischen Folienmustern mit einer Kantenlänge von 10 cm bestimmt. Die Proben wurden so ausgeschnitten, dass eine Kante parallel zur Maschinenrichtung und eine Kante senkrecht zur Maschinenrichtung verlief. Die Proben wurden genau ausgemessen (die Kantenlänge $L_0$ wurde für jede Maschinenrichtung TD und MD bestimmt, $L_{0\,TD}$ und $L_{0\,MD}$) und 15 min bei der angegeben Schrumpfungstemperatur (hier 150 °C) in einem Umlufttrockenschrank getempert. Die Proben wurden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\,MD} - L_{MD}) / L_{0\,MD}, \text{ bzw.}$$

$$\text{Schrumpf [\%] TD} = 100 \bullet (L_{0\,TD} - L_{TD}) / L_{0\,TD}$$

**Ausdehnung**

Die thermische Ausdehnung wurde an quadratischen Folienmustern mit einer Kantenlänge von 10 cm bestimmt. Die Proben wurden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung:

$$\text{Ausdehnung [\%]} = 100 \cdot (L - L_0) / L_0$$

und wurde in jeder Folienrichtung separat ermittelt.

**Wärmeleitfähigkeit**

Zur Bestimmung der Wärmeleitfähigkeit von Folien bedient man sich dem "Thermal Interface Material"-Verfahren an dem Gerät TIMA der Firma Berliner Nanotest und Design GmbH, beschrieben in WO2012107355 (A1). Die Folienoberfläche wird zunächst beidseitig mit einer Paste bestrichen, um Oberflächeneffekte wie Rauheit auszuschließen und einen möglichst guten Kontakt zwischen Probe und Messgerät herzustellen. Die Paste hat eine bekannte Wärmeleitfähigkeit. Geeignet dafür ist beispielsweise die Silikon-Wärmeleitpaste "Dow Corning® 340 Heat Sink Compound". Die so präparierte Probe wird mit einem konstanten Druck von 600 kPa und Raumtemperatur zwischen zwei Referenzkörper aus CuZn - CuZn eingespannt. Die Kontaktfläche beträgt 132,7 $mm^2$. Ein Referenzkörper ist wiederum mit einer Heizquelle verbunden, die auf 100 °C temperiert ist. Der andere Referenzkörper befindet sich an einem Wärmeableiter mit einer Temperatur von 15 °C. Entlang der beiden Referenzkörper wird der Temperaturverlauf gemessen. Daraus ergibt sich der thermische Grenzflächenwiderstand des Systems $R_{th,total}$, woraus man den thermischen Grenzflächenwiderstand der Probe $R_{th,film}$ erhält. Bei bekannter Dicke und Kontaktfläche, lässt sich daraus die Wärmeleitfähigkeit A senkrecht zur Probenebene bestimmen.

$$R_{th,film} = R_{th,total} - 2 \cdot R_{th,Paste}$$

$R_{th}$: Thermischer Grenzflächenwiderstand

$$R_{th,Paste} = 0{,}079\ \text{K/W}$$

$$\lambda = \frac{\text{Dicke Probe}}{R_{th,film} \cdot \text{Fläche}}$$

**RTI**

Bei der Ermittlung von Temperatur-Zeit-Grenzen werden die Proben in einem Umluft-Wärmeschrank bei mindestens drei Temperaturen unterschiedlich lang gelagert. Vor und nach der Wärmelagerung wird ein Eigenschaftswert (Reißdehnung, bezogen auf Initialwert vor Bestückung im Umluft-Wärmeschrank) nach Angleichung an Raumtemperatur gemessen. In Abhängigkeit von der Temperatur wird die jeweilige Zeit ermittelt, bei der dieser Eigenschaftswert einen definierten Grenzwert (≤ 2%) erreicht hat.

Die Reißdehnung wird, wie bereits beschrieben, angelehnt an DIN EN ISO 572-1 und -3 (Probekörper Typ 2) an 100 mm x 15 mm großen Folienstreifen bestimmt.

Die Auswertung solcher Versuche erfolgt durch Auftragen des Eigenschaftswertes über der Warmlagerungszeit. Die Lagerungszeiten, bei der die Proben bei der jeweiligen Temperatur versagen, werden halblogarithmisch gegen reziproke Lagerungstemperatur (in $K^{-1}$) aufgetragen. Die so erhaltene Gerade wird auf 20.000 Stunden extrapoliert. Dabei wird aus dem Diagramm die Temperatur abgelesen, die einer Lebensdauer von 20.000 Stunden entspricht und als Temperaturindex TI benannt.

**Messung der Spannungsfestigkeit / Durchschlagfestigkeit**

Die Messung der Spannungsfestigkeit erfolgt gemäß DIN 53481-3 (unter Berücksichtigung von DIN 40634 für die speziellen Folienanweisungen). Es wird mittels Kugel/Platte (Elektrodendurchmesser 49,5 mm) bei einer sinusförmigen Wechselspannung von 50 Hz bei 23 °C und 50 rel. Luftfeuchte in Luft gemessen.

Die Durchschlagfestigkeit wird nach IEC 60674 mit 20mm Kugel, 50 mm Platte und, 50 Hz AC gemessen und über 10 Messstellen gemittelt.

**Beispiele**

Die Polymermischungen werden bei 292 °C aufgeschmolzen und durch eine Breitschlitzdüse auf eine auf 50° C temperierte Kühlwalze elektrostatisch angelegt. Anschließend wird sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | Unterschiedlich, zwischen 1 und 4 | |
| Querstreckung | Aufheiztemperatur | 100 | °C |
| | Strecktemperatur | 112 | °C |
| | Querstreckverhältnis (inklusive Streckung 1.Fixierfeld) | Unterschiedlich, zwischen 1 und 4 | |
| Fixierung | Temperatur | 237 - 150 | °C |
| | Dauer | 3 | s |
| | Relaxation in TD bei 200 - 150 °C | 5 | % |
| Fixierung | Temperatur 1. Fixierfeld | 170 | °C |

In den Beispielen (erfindungsgemäß) kommen die folgenden Rohstoffe zum Einsatz:
PET1 = Polyethylenterephthalatrohstoff aus Ethylenglykol und Terephthalsäure mit einem SV Wert von 1100 und DEG-Gehalt von 0,9 Mol-% (Diethylenglykolgehalt bzgl. der Diolkomponente).

PET2 = Polyethylenterephthalatrohstoff aus Ethylenglykol und Terephthalsäure mit einem SV Wert von 840.

PET3 = Polyethylenterephthalatrohstoff mit einem SV-Wert von 830, der 22,4 Mol-% Isophthalsäure (bzgl. der Dicarbonsäurekomponente).

PEN = Polyethylennaphthalat mit einem SV-Wert von 580.

PET4 = Polyethylenterephthalatrohstoff mit einem SV-Wert von 580 und 50 Gew.-% Aluminiumnitrid AB 253753 AlN mit einem d50 von 55 µm (H.C. Starck, München Deutschland) . Das Partikel wurde in einem Zweischneckenextruder

in das Polyethylenterephthalat PET1 eingearbeitet.

PET5 = Polyethylenterephthalatrohstoff mit einem SV-Wert von 550 und 50 Gew.-% hexagonales Bornitrid BN GRADE B 50 mit einem d50 von 10 μm (H.C. Starck, München Deutschland). Das Partikel wurde in einem Zweischneckenextruder in das Polyethylenterephthalat PET1 eingearbeitet.

PET6 = Polyethylenterephthalatrohstoff mit einem SV-Wert von 580 und 50 Gew.-% Siliziumdioxidpartikel Cristobalit SILBOND® 8000 RST mit einem d50 von 2 μm (Quarzwerke GmbH, Frechen Deutschland) . Das SiO2 wurde in einem Zweischneckenextruder in das Polyethylenterephthalat PET1 eingearbeitet.

PET7 = Polyethylenterephthalatrohstoff aus Ethylenglykol und Terephthalsäure mit einem SV Wert von 870 und einer Carboxylendgruppenzahl von 10 mmol/kg.

PET8 = 5000 ppm Irganox 1330 CAS-Nr. 1709-70-2 (Hersteller BASF Schweiz) eingearbeitet mittels eines Zweischneckenextruders in PET1. SV-Wert 780.

| | | Vergleichsbeispiel-1 | Beispiel-1 | Beispiel-2 | Beispiel-3 | Beispiel-4 | Vergleichs-beispiel-2 | Vergleichs-beispiel-3 | Vergleichs-beispiel-4 | Vergleichs-beispiel-5 | Vergleichs-beispiel-6 | Beispiel-5 |
|---|---|---|---|---|---|---|---|---|---|---|---|---|
| PET1 | [%] | 30 | 47,5 | 36,5 | 10 | 47,5 | | 50 | 50 | 50 | 50 | 41,5 |
| PET2 | [%] | 70 | | | | | | 30 | 30 | 30 | 30 | |
| PET3 | [%] | | 25 | 25 | 25 | | 5 | | | | | 25 |
| PEN | [%] | | | | | 25 | | | | | | |
| PET4 | [%] | | | | | | | 20 | 20 | | | |
| PET5 | [%] | | | | | | | | | 20 | 20 | 13,5 |
| PET6 | [%] | | 27,5 | 38,5 | 37 | 27,5 | 95 | | | | | 20 |
| PET7 | [%] | | | | 20 | | | | | | | |
| PET8 | [%] | | | | 8 | | | | | | | |
| SV Mischung | | 918 | 895 | 840 | 776 | 833 | 692 | 918 | 918 | 912 | 912 | 888 |
| Flächenstreckverhältni s | | 13,69 | 6,66 | 5,58 | 7 | 9 | 12,25 | 12,25 | 1 | 1 | 9 | 12,25 |
| Dicke | [μm] | 75 | 105 | 110 | 145 | 125 | 75 | 115 | 450 | 275 | 85 | 70 |
| Wärmeleitfähigkeit λ senkrecht zur Folienebene | [W/(m · K)] | 0,20 | 0,40 | 0,38 | 0,46 | 0,35 | 0,56 | 0,23 | 0,34 | 0,35 | 0,20 | 0,35 |
| E-Modul in MD | [N/mm²] | 4000 | 2500 | 2500 | 2600 | 3200 | 2000 | 2800 | 1200 | 1400 | 2200 | 2500 |
| Reißkraft in MD | [N/mm²] | 191 | 53 | 49 | 57 | 118 | 30 | 77 | | | | 50 |
| Bruchdehnung in MD | [%] | 145 | 8 | 10 | 38 | 60 | 1,9 | 32 | 300 | 380 | 70 | 45 |
| Durchschlagfestigkeit | [kV/mm] | 205 | 205 | 205 | 185 | 190 | 195 | 205 | 60 | 60 | 205 | 205 |
| RTI | [C] | 130 | 100 | 100 | 130 | 135 | 72 | 130 | 75 | 75 | 130 | 105 |
| Bemerkung | | | | | | | schlechte Laufsicherheit, Abrisse | metallischer Abrieb aus Extruder | metallischer Abrieb aus Extruder | | | |

**Patentansprüche**

1. Ein oder mehrschichtige, mindestens monoaxial orientierte Polyesterfolie, **gekennzeichnet dadurch, dass**

   - die Folie 10-45 Gew.-% kristalline Silikatpartikel bezogen auf das Gesamtgewicht der Folie enthält,
   - die kristallinen Silikatpartikel einen d50-Wert zwischen 0,1 und 15 μm aufweisen, bestimmt wie zuvor unter Messung des mittleren Partikel-Durchmessers beschrieben,
   - die kristallinen Silikatpartikel Kyanit und/oder Cristobalit sind,

   und wobei der polymere Bestandteil der Folie mindestens 50 Gew.-% ausmacht und zu mindestens 75 Mol.-% aus einem thermoplastischen Polyester besteht.

2. Folie gemäß Anspruch 1, **dadurch gekennzeichnet, dass** der polymere Bestandteil der Folie zu mehr als 85 Mol.-%, bevorzugt 95 Mol.-% aus dem thermoplastischen Polyester besteht, wobei der thermoplastische Polyester bevorzugt aus mindestens 80 Mol.-%, bevorzugt mindestens 83 Mol.-%, besonders bevorzugt mindestens 88 Mol.-% Ethylenglykol- und Therephthalsäure-Einheiten besteht.

3. Folie gemäß Anspruch 1 oder 2, **dadurch gekennzeichnet, dass** die Silikatpartikel mit Methacrylsilan, Trimethylsilan, Methylsilan, Epoxysilan, Aminosilan oder einer Kombinationen daraus beschichtet sind, wobei Epoxysilan, Aminosilan und Kombinationen daraus bevorzugt sind.

4. Folie gemäß einem oder mehreren der Ansprüche 1 bis 3, **dadurch gekennzeichnet, dass** Kyanit eine trikline Kristallstruktur und Cristobalit eine tetragonale oder kubische, bevorzugt eine kubische Kristallstruktur aufweist.

5. Folie gemäß einem oder mehreren der Ansprüche 1 bis 4, **dadurch gekennzeichnet, dass** der $d_{98}$-Wert der kristallinen Silikatpartikel kleiner 40 μm, bevorzugt kleiner 25 μm, besonders bevorzugt kleiner 15 μm ist.

6. Folie gemäß einem oder mehreren der Ansprüche 1 bis 5, **dadurch gekennzeichnet, dass** sie 10 bis 30 Gew.-% kristalline Silikatpartikel und 5 bis 15 Gew.-% hexagonales Bornitrid, bevorzugt 12 bis 25 Gew.-% kristalline Silikatpartikel und 6 bis 10 Gew.-% hexagonales Bornitrid umfasst.

7. Folie gemäß Anspruch 6, wobei der $d_{50}$-Wert des hexagonalen Bornitrids kleiner als 15 μm, bevorzugt kleiner als 6 μm ist.

8. Folie gemäß einem oder mehreren der Ansprüche 1 bis 7, **dadurch gekennzeichnet, dass** die Folie eine mehrschichtige Folie ist und mindestens eine dieser Schichten weniger als 10 % der Gesamtdicke der Folie ausmacht, wobei diese Schicht eine Deckschicht ist und weniger als 10 Gew.-%, bevorzugt weniger als 5 Gew.-% der kristallinen Silikatpartikel, bezogen auf das Gesamtgewicht des Films, enthält,

9. Folie gemäß einem oder mehreren der Ansprüche 1 bis 8, **dadurch gekennzeichnet, dass** die Folie mindestens einen Radikalfänger enthält, wobei der Gehalt an Radikalfänger in dem Bereich von 100 bis 5000 ppm, bevorzugt von 400 bis 2000 ppm, besonders bevorzugt von 500 bis 1200 ppm, bezogen auf die Masse der Folie liegt.

10. Folie gemäß Anspruch 9, **dadurch gekennzeichnet, dass** der Radikalfänger ein phenolischer Antioxidant ist und das Strukturelement (I) enthält

    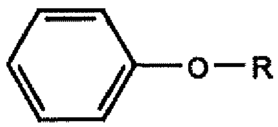

    (I),

    wobei R ein organischer Rest ist, und
    wobei das Molekulargewicht des Radikalfängers größer als 300 g/Mol, bevorzugt größer als 500 g/Mol, besonders bevorzugt 700 g/Mol ist.

11. Folie gemäß einem oder mehreren der Ansprüche 1 bis 10, **dadurch gekennzeichnet, dass** die Folie

- eine Dicke von 9 bis 400 μm, bevorzugt 100 bis 350 μm, besonders bevorzugt 120 bis 300 μm,
- eine Wärmeleitfähigkeit von mindestens 0,3 W $m^{-1}K^{-1}$, bevorzugt von mindestens 0,35 W $m^{-1}K^{-1}$, besonders bevorzugt von 0,45 W $m^{-1}K^{-1}$,
- ein Flächenstreckverhältnis im Bereich von 2 bis 16, bevorzugt von 3 bis 14, besonders bevorzugt von 5 bis 13 bis,
- eine Reißdehnung von größer 5 %, bevorzugt, größer 15 %, besonders bevorzugt größer 20 %,
- ein E-Modul von mindestens 1000 N $mm^{-2}$, bevorzugt von mindestens 1500 N $mm^{-2}$, besonders bevorzugt von mindestens 2000 N $mm^{-2}$,
- eine Durchschlagfestigkeit von mindestens 90 kV $mm^{-1}$, bevorzugt von mindestens 100 kV $mm^{-1}$, besonders bevorzugt von mindestens 110 kV $mm^{-1}$ und
- einen Relativen Temperatur Index (RTI-Wert) von mindestens 90 aufweist.

**12.** Verfahren zur Herstellung einer Folie nach Anspruch 1 oder 11, wobei man zunächst den Polyester bzw. die Polyestermischung der Folie oder bei Mehrschichtfolien der einzelnen Schichten der Folie in Extrudern komprimiert und verflüssigt, die entstandene(n) Schmelze/Schmelzen in einer Ein- bzw. Mehrschichtdüse zu flachen Schmelzefilmen ausformt, durch eine Breitschlitzdüse presst und auf einer Kühlwalze und einer oder mehreren Abzugswalzen abzieht, wobei sie abkühlt und sich verfestigt, sodann mindestens uniaxial streckt, nachfolgend thermofixiert und die Folie dann aufgewickelt, wobei

- die Folie 10-45 Gew.-% kristalline Silikatpartikel bezogen auf das Gesamtgewicht der Folie enthält,
- die kristallinen Silikatpartikel einen $d_{50}$-Wert zwischen 0,1 und 15 μm aufweisen,
- die kristallinen Silikatpartikel Kyanit und/oder Cristobalit sind,

und wobei der polymere Bestandteil der Folie mindestens 50 Gew.-% ausmacht und zu mindestens 75 Mol.-% aus einem thermoplastischen Polyester besteht.

**13.** Verwendung einer ein- oder mehrschichtigen, mindestens monoaxial orientierten Polyesterfolie nach Anspruch 1, als Elektroisoliermaterial.

**14.** Verwendung nach Anspruch 13 in Solarmodulen, Elektromotoren, Computern oder sonstigen elektronischen Geräten.

**15.** Verwendung nach Anspruch 13 oder 14 als flächiges Isolationsmaterial.

## Claims

**1.** Single- or multilayer, at least monoaxially oriented polyester film, **characterized in that**

- the film comprises from 10 to 45 % by weight of crystalline silicate particles, based on the total weight of the film,
- the $d_{50}$ value of the crystalline silicate particles is from 0.1 to 15 μm, determined as described above under measurement of particle diameter,
- the crystalline silicate particles are cyanite and/or cristobalite

and where the polymeric constituent of the film makes up at least 50 % by weight and at least 75 mol% of said constituent consists of a thermoplastic polyester.

**2.** Film according to Claim 1, **characterized in that** more than 85 mol%, preferably 95 mol%, of the polymeric constituent of the film consists of the thermoplastic polyester, where the thermoplastic polyester preferably consists of at least 80 mol%, preferably at least 83 mol%, particularly preferably at least 88 mol%, of ethylene glycol units and terephthalic acid units.

**3.** Film according to Claim 1 or 2, **characterized in that** the silicate particles have been coated with methacrylic silane, trimethylsilane, methylsilane, epoxysilane, aminosilane or a combination thereof, preference being given here to epoxysilane, aminosilane and combinations thereof.

**4.** Film according to one or more of Claims 1 to 3, **characterized in that** cyanite has a triclinic crystal structure and critstobalite has a tetragonal or cubic, preferably cubic, crystal structure.

**5.** Film according to one or more of Claims 1 to 4, **characterized in that** the $d_{98}$ value of the crystalline silicate particles is less than 40 µm, preferably less than 25 µm, particularly preferably less than 15 µm.

**6.** Film according to one or more of Claims 1 to 5, **characterized in that** it comprises from 10 to 30 % by weight of crystalline silicate particles and from 5 to 15 % by weight of hexagonal boron nitride, preferably from 5 to 25 % by weigh t of crystalline silicate particles and from 6 to 10 % by weight of hexagonal boron nitride.

**7.** Film according to Claim 6, wherein the $d_{50}$ value of the hexagonal boron nitride is less than 15 µm, preferably less than 6 µm.

**8.** Film according to one or more of Claims 1 to 7, **characterized in that** the film is a multilayer film and at least one of these layers makes up less than 10 % by weight of the total thickness of the film, where this layer is an outer layer and comprises less than 10 % by weight, preferably less than 5 % by weight, of the crystalline silicate particles, based on the total weight of the film.

**9.** Film according to one or more of Claims 1 to 8, **characterized in that** the film comprises at least one free-radical scavenger, where the free-radical scavenger content is in the range from 100 to 5000 ppm, preferably from 400 to 2000 ppm, particularly preferably from 500 to 1200 ppm, based on the mass of the film.

**10.** Film according to Claim 9, **characterized in that** the free-radical scavenger is a phenolic antioxidant and comprises the structural element (I)

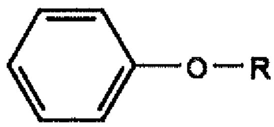

(I),

where R is an organic moiety, and
where the molar mass of the free-radical scavenger is greater than 300 g/mol, preferably greater than 500 g/mol, particularly preferably 700 g/mol.

**11.** Film according to one or more of Claims 1 to 10, **characterized in that** the film has

- a thickness of from 9 to 400 µm, preferably from 100 to 350 µm, particularly preferably from 120 to 300 µm,
- a thermal conductivity of at least 0.3 W $m^{-1}K^{-1}$, preferably of at least 0.35 W $m^{-1}K^{-1}$, particularly preferably of 0.45 W $m^{-1}K^{-1}$,
- an area stretching ratio in the range from 2 to 16, preferably from 3 to 14, particularly preferably from 5 to 13,
- a tensile strain at break of more than 5 %, preferably more than 15 %, particularly preferably more than 20 %,
- a modulus of elasticity of at least 1000 N $mm^{-2}$, preferably of at least 1500 N $mm^{-2}$, particularly preferably of at least 2000 N $mm^{-2}$,
- a dielectric strength of at least 90 kV $mm^{-1}$, preferably of at least 100 kV $mm^{-1}$, particularly preferably of at least 110 kV $mm^{-1}$ and
- a relative temperature index (RTI value) of at least 90.

**12.** Process for the production of a film according to Claim 1 or 11, wherein the polyester or polyester mixture of the film, or of the individual layers of the film in the case of multilayer films, is compressed and rendered flowable in extruders, the resultant melt(s) is/are shaped in a single-layer die or coextrusion die to give flat melt films, and is/are forced through a slot die and drawn off on a chill roll and one or more take-off rolls, with cooling and solidification, and then is/are at least monoaxially stretched, and then heat-set, and the film is then wound up, where

- the film comprises from 10 to 45 % by weight of crystalline silicate particles, based on the total weight of the film,
- the $d_{50}$ value of the crystalline silicate particles is from 0.1 to 15 µm,
- the crystalline silicate particles are cyanite and/or cristobalite

and where the polymeric constituent of the film makes up at least 50 % by weight and at least 75 mol% of said constituent consists of a thermoplastic polyester.

**13.** Use, as electrical insulation material, of a single- or multilayer, at least monoaxially oriented polyester film according to Claim 1.

**14.** Use according to Claim 13 in solar modules, electric motors, computers or other electronic equipment.

**15.** Use according to Claim 13 or 14 as layer of insulation material.

**Revendications**

**1.** Feuille de polyester orientée au moins de façon monoaxiale, à une ou plusieurs couches, **caractérisée en ce que**

- la feuille contient 10-45 % en poids de particules de silicate cristallines par rapport au poids total de la feuille,
- les particules de silicate cristallines présentent une valeur d50 entre 0,1 et 15 μm, déterminée comme décrit précédemment en mesurant le diamètre moyen de particule,
- les particules de silicate cristallines sont du disthène et/ou de la cristobalite,

et dans laquelle le composant polymère de la feuille constitue au moins 50 % en poids et consiste en au moins 75 % en mole d'un polyester thermoplastique.

**2.** Feuille selon la revendication 1, **caractérisée en ce que** le composant polymère de la feuille consiste en plus de 85 % en mole, de préférence 95 % en mole du polyester thermoplastique, dans laquelle le polyester thermoplastique consiste de préférence en au moins 80 % en mole, de préférence au moins 83 % en mole, le plus préférentiellement au moins 88 % en mole de motifs d'éthylène glycol et d'acide téréphtalique.

**3.** Feuille selon la revendication 1 ou 2, **caractérisée en ce que** les particules de silicate sont revêtues de méthacrylsilane, triméthylsilane, méthylsilane, époxysilane, aminosilane ou d'une combinaison de ceux-ci, dans laquelle l'époxysilane, l'aminosilane et des combinaisons de ceux-ci sont préférés.

**4.** Feuille selon l'une quelconque ou plusieurs des revendications 1 à 3, **caractérisée en ce que** le disthène présente une structure cristalline triclinique et la cristobalite présente une structure cristalline tétragonale ou cubique, de préférence cubique.

**5.** Feuille selon l'une quelconque ou plusieurs des revendications 1 à 4, **caractérisée** en ce la valeur $d_{98}$ des particules de silicate cristallines est inférieure à 40 μm, de préférence inférieure à 25 μm, de manière particulièrement préférée inférieure à 15 μm.

**6.** Feuille selon l'une quelconque ou plusieurs des revendications 1 à 5, **caractérisée en ce qu'**elle comprend 10 à 30 % en poids de particules de silicate cristallines et 5 à 15 % en poids de nitrure de bore hexagonal, de préférence 12 à 25 % en poids de particules de silicate cristallines et 6 à 10 % en poids de nitrure de bore hexagonal.

**7.** Feuille selon la revendication 6, dans laquelle la valeur $d_{50}$ du nitrure de bore hexagonal est inférieure à 15 μm, de préférence inférieure à 6 μm.

**8.** Feuille selon l'une quelconque ou plusieurs des revendications 1 à 7, **caractérisée en ce que** la feuille est une feuille multicouche et au moins une de ces couches constitue moins de 10 % de l'épaisseur totale de la feuille, dans laquelle cette couche est une couche de couverture et contient moins de 10 % en poids, de préférence moins de 5 % en poids des particules de silicate cristallines, par rapport au poids total du film.

**9.** Feuille selon l'une quelconque ou plusieurs des revendications 1 à 8, **caractérisée en ce que** la feuille contient au moins un piégeur de radicaux, dans laquelle la teneur en piégeur de radicaux se situe dans la plage de 100 à 5 000 ppm, de préférence de 400 à 2 000 ppm, le plus préférentiellement de 500 à 1 200 ppm, par rapport à la masse de la feuille.

**10.** Feuille selon la revendication 9, **caractérisée en ce que** le piégeur de radicaux contient un antioxydant phénolique et l'élément structurel (I)

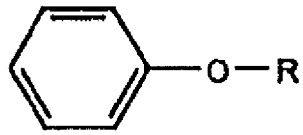

(I),

dans laquelle R est un radical organique, et
dans laquelle le poids moléculaire du piégeur de radicaux est supérieur à 300 g/mole, de préférence supérieur à 500 g/mole, le plus préférentiellement de 700 g/mole.

**11.** Feuille selon l'une quelconque ou plusieurs des revendications 1 à 10, **caractérisée en ce que** la feuille

- présente une épaisseur de 9 à 400 μm, de préférence de 100 à 350 μm, le plus préférentiellement de 120 à 300 μm,
- une conductivité thermique d'au moins 0,3 W $m^{-1}K^{-1}$, de préférence d'au moins de 0,35 W $m^{-1}K^{-1}$, le plus préférentiellement de 0,45 W $m^{-1}K^{-1}$,
- un rapport d'étirage surfacique dans la plage de 2 à 16, de préférence de 3 à 14, le plus préférentiellement de 5 à 13,
- un allongement à la rupture supérieur à 5 %, de préférence supérieur à 15 %, le plus préférentiellement supérieur à 20 %,
- un module d'élasticité d'au moins 1 000 N $mm^{-2}$, de préférence d'au moins 1 500 N $mm^{-2}$, le plus préférentiellement d'au moins 2 000 N $mm^{-2}$,
- une rigidité diélectrique d'au moins 90 kV $mm^{-1}$, de préférence d'au moins 100 kV $mm^{-1}$, le plus préférentiellement d'au moins 110 kV $mm^{-1}$ et
- un indice de température relative (valeur RTI) d'au moins 90.

**12.** Procédé de fabrication d'une feuille selon la revendication 1 ou 11, dans lequel on comprime et fluidifie tout d'abord le polyester ou le mélange de polyester de la feuille ou dans le cas de feuilles multicouches des couches individuelles de la feuille dans des extrudeuses, on façonne la masse fondue/les masses fondues obtenue(s) dans une buse monocouche ou multicouche en films fondus plats, on presse à travers une buse à fente large et on tire sur un cylindre froid et un ou plusieurs cylindres de tirage, dans lequel on la refroidit et la solidifie, ensuite on l'étire au moins uniaxialement, puis on thermofixe et enroule ensuite la feuille, dans lequel

- la feuille contient 10-45 % en poids de particules de silicate cristallines par rapport au poids total de la feuille,
- les particules de silicate cristallines présentent une valeur $d_{50}$ entre 0,1 et 15 μm,
- les particules de silicate cristallines sont du disthène et/ou de la cristobalite,

et dans lequel le composant polymère de la feuille constitue au moins 50 % en poids et consiste en au moins 75 % en mole d'un polyester thermoplastique.

**13.** Utilisation d'une feuille de polyester monocouche ou multicouche, orientée au moins de façon monoaxiale selon la revendication 1 comme matériau isolant électrique.

**14.** Utilisation selon la revendication 13 dans des modules solaires, des moteurs électriques, des ordinateurs ou d'autres appareils électroniques.

**15.** Utilisation selon la revendication 13 ou 14 comme matériau isolant plat.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2209845 A
- WO 2016139992 A1
- EP 2878620 A1
- EP 2251371 A
- EP 2184311 A
- WO 2012107355 A1


### In der Beschreibung aufgeführte Nicht-Patentliteratur


- *CHEMICAL ABSTRACTS,* 88-24-4
- *CHEMICAL ABSTRACTS,* 96-69-5
- *CHEMICAL ABSTRACTS,* 119-47-1
- *CHEMICAL ABSTRACTS,* 128-37-0
- *CHEMICAL ABSTRACTS,* 991-84-4
- *CHEMICAL ABSTRACTS,* 1709-70-2
- *CHEMICAL ABSTRACTS,* 1843-03-4
- *CHEMICAL ABSTRACTS,* 2082-79-6
- *CHEMICAL ABSTRACTS,* 3135-18-0
- *CHEMICAL ABSTRACTS,* 4130-42-1
- *CHEMICAL ABSTRACTS,* 6683-19-8
- *CHEMICAL ABSTRACTS,* 23128-74-7
- *CHEMICAL ABSTRACTS,* 25013-16-5
- *CHEMICAL ABSTRACTS,* 27676-62-6
- *CHEMICAL ABSTRACTS,* 32509-66-3
- *CHEMICAL ABSTRACTS,* 32687-78-8
- *CHEMICAL ABSTRACTS,* 35074-77-2
- *CHEMICAL ABSTRACTS,* 35958-30-6
- *CHEMICAL ABSTRACTS,* 36443-68-2
- *CHEMICAL ABSTRACTS,* 40601-76-1
- *CHEMICAL ABSTRACTS,* 57569-40-1
- *CHEMICAL ABSTRACTS,* 61167-58-6
- *CHEMICAL ABSTRACTS,* 65140-91-2
- *CHEMICAL ABSTRACTS,* 70331-94-1
- *CHEMICAL ABSTRACTS,* 110553-27-0
- *CHEMICAL ABSTRACTS,* 110675-26-8